# EUROPÄISCHE PATENTANMELDUNG

(11) **EP 1 522 810 A2**
(43) Veröffentlichungstag der Anmeldung: **13.04.2005**
(21) Anmeldenummer: 04021520.4
(22) Anmeldetag: 10.09.2004
(51) Int. Cl.: F28D 1/04, F28F 9/00

(54) **Wärmeübertrager für ein Kraftfahrzeug, insbesondere Kühlmittel/Luft-Kühler**

(30) Priorität: 09.10.2003 DE 10347679
(71) Anmelder: Behr GmbH & Co. KG, 70469 Stuttgart (DE)
(72) Erfinder: Heine, Richard, 71686 Remseck (DE)

(57) **Zusammenfassung**

Die Erfindung betrifft einen Wärmeübertrager für ein Kraftfahrzeug, insbesondere einen Kühlmittel/Luft-Kühler (2'), welcher im Kraftfahrzeug an einem unteren Träger und einem oberen Querträger mittels oberen und unteren Befestigungselementen befestigbar ist, wobei der Wärmeübertrager (2') Sammelkästen (6', 7') aus Kunststoff aufweist, an welche die Befestigungselemente anspritzbar sind.

Es wird vorgeschlagen, dass die Befestigungselemente (10', 11', 12' 13') mit unterschiedlichen Positionen und/oder unterschiedlichen Abmessungen, insbesondere zwei Positionen und/oder zwei Abmessungen herstellbar sind. Vorzugsweise ist für die Herstellung ein Spritzwerkzeug mit Wechseleinsätzen vorgesehen.

## Beschreibung

Die Erfindung betrifft einen Wärmeübertrager für ein Kraftfahrzeug, insbesondere einen Kühlmittel/Luft-Kühler nach dem Oberbegriff des Patentanspruches 1.

Wärmeübertrager für Kraftfahrzeuge wie Kühlmittel/Luft-Kühler, Ladeluft/Luft-Kühler, Kältemittel/Luft-Kondensatoren und/oder ÖI/Luft-Kühler werden üblicherweise im vorderen Motorraum des Kraftfahrzeuges angeordnet, wobei die genannten Wärmeübertrager vielfach zu einem vormontierten Kühlmodul zusammengefasst sind. Durch die DE 199 53 787 A1 wurde ein solches Kühlmodul, bestehend aus einem Kühlmittel/Luftkühler, einem Ladeluft/Luftkühler und einem Kältemittel/Luft-Kondensator bekannt. Die Wärmeübertrager sind untereinander fest zu einer Baueinheit verbunden, die in das Fahrzeug eingesetzt und dort befestigt wird. Für die Befestigung weist einer der Wärmeübertrager Befestigungselemente auf, die z. B. an aus Kunststoff hergestellten Sammelkästen angeordnet sind, z. B. Befestigungszapfen an der Unterseite des Wärmeübertragers und Befestigungsöffnungen an der Oberseite. Der Wärmeübertrager bzw. das komplette Kühlmodul wird dann mit seinen Befestigungszapfen an einem Karosserieteil, z. B. einem Querträger elastisch aufgenommen und an der Oberseite an einem Schlossquerträger des Fahrzeuges befestigt. Damit ist der Wärmeübertrager bzw. das Kühlmodul im Wesentlichen an vier Punkten im Fahrzeug befestigt.

Bei manchen Fahrzeugtypen ergibt sich ein technisches Problem, wenn derselbe Wärmeübertrager oder dasselbe Kühlmodul an verschiedenen Stellen eingebaut werden soll, wobei die Befestigungspunkte im Fahrzeug dieselben bleiben. Dieses Problem liegt der Erfindung zugrunde.

Es ist Aufgabe der vorliegenden Erfindung, einen Wärmeübertrager der eingangs genannten Art - einzeln oder als Bestandteil eines Kühlmoduls - an unterschiedlichen Positionen im Fahrzeug bei gleichen Befestigungspunkten einzubauen. Insbesondere ist es Aufgabe der Erfindung, dass der Einbau möglichst ohne Zusatzteile und ohne zusätzliche Herstellungskosten erfolgt.

Diese Aufgabe wird durch die Merkmale des Patentanspruches 1 gelöst. Erfindungsgemäß ist vorgesehen, dass die an den Sammelkästen des Wärmeübertragers anspritzbaren Befestigungselemente in unterschiedlichen Positionen und Abmessungen herstellbar sind, d. h. der gesamte Wärmeübertrager einschließlich seiner Sammelkästen bleibt derselbe, lediglich die Befestigungselemente sind unterschiedlich ausgebildet und an die unterschiedlichen Einbauverhältnisse angepasst. Damit ergibt sich der Vorteil, dass keine zusätzlichen Befestigungselemente erforderlich werden, um den Wärmeübertrager in einer anderen Position im Fahrzeug zu befestigen. Dies erspart Kosten, Lagerhaltung und Montagezeit und vereinfacht die Montage, da diese praktisch in beiden Fällen in derselben Weise erfolgt.

In vorteilhafter Ausgestaltung der Erfindung werden die unterschiedlichen Befestigungselemente durch die Verwendung von so genannten Wechseleinsätzen am Spritzwerkzeug hergestellt. Das Spritzwerkzeug zum Abspritzen des Sammelkastens wird mit unterschiedlichen Wechseleinsätzen, die speziell an die unterschiedlichen Abmessungen und Positionen der Befestigungselemente angepasst sind, ausgestattet, sodass das übrige Werkzeug dasselbe bleibt. Damit ergibt sich der Vorteil, dass mit einem Spritzwerkzeug Sammelkästen mit unterschiedlichen Befestigungselementen hergestellt werden können, wobei die Sammelkästen mit Ausnahme der Befestigungselemente dieselben sind. Dies erspart Herstellungskosten, insbesondere für ein komplettes zweites Werkzeug.

In weiterer vorteilhafter Ausgestaltung der Erfindung sind die Befestigungselemente als Halter mit einem L-Profil ausgebildet, wobei ein (senkrechter) L-Schenkel in die Wand des Sammelkastens integriert ist und der andere (waagerechte) L-Schenkel vom Sammelkasten abragt und einen Fuß für die Befestigung des Wärmeübertragers bildet. Dieser Fuß weist unterschiedliche Längen auf, je nach Einbauanforderung im Fahrzeug. Damit wird der Vorteil erreicht, dass der Wärmeübertrager - z. B. in Fahrtrichtung des Fahrzeuges gesehen - an unterschiedlichen Positionen, z. B. 5 cm weiter vorne bei denselben fahrzeugfesten Befestigungspunkten befestigt werden kann.

In weiterer vorteilhafter Ausgestaltung der Erfindung sind die L-Schenkel durch Rippen versteift, sodass sich im Querschnitt ein U-Profil mit erhöhtem Widerstandmoment ergibt. Das durch Rippen versteifte L-Profil eignet sich insbesondere zur Aufnahme von Biegebeanspruchungen, welche bei dem verlängerten Fuß vermehrt auftreten.

In weiterer vorteilhafter Ausgestaltung der Erfindung sind die oberen Befestigungselemente an den Sammelkästen als offene Kastenprofile ausgebildet, die an unterschiedlichen Positionen des Sammelkastens anspritzbar sind, z. B. auf der Vorderseite und auf der Rückseite. Dies geschieht ebenfalls durch Austausch der Wechseleinsätze im Spritzwerkzeug. Mittels der oberen Befestigungselemente wird der Wärmeübertrager bzw. das Kühlmodul am oberen Querträger des Fahrzeuges befestigt, indem dort fahrzeugfeste Befestigungszapfen in die Kastenprofile eingreifen. Durch die unterschiedlichen Positionen wird der Vorteil erreicht, dass der Wärmeübertrager auch mit seinen oberen Befestigungselementen an unterschiedlichen Stellen im Fahrzeug bei gleichen fahrzeugseitigen Befestigungspunkten befestigt werden kann. Damit ist eine stabile Halterung an vier Punkten gewährleistet.

In weiterer vorteilhafter Ausgestaltung der Erfindung dient der Wärmeübertrager mit den Befestigungselementen als Träger für weitere Wärmeübertrager wie z. B. einen Ladeluftkühler und/oder einen Kältemittelkondensator, die in Luftströmungsrichtung gesehen vor oder hinter dem Wärmeübertrager, der in diesem Falle als Kühlmittelluft-Kühler ausgebildet ist, angeordnet sind. Somit dient der KühlmittelLuft-Kühler mit den erfindungsgemäßen Befestigungselementen als Träger für das gesamte Kühlmodul.

Ein Ausführungsbeispiel der Erfindung ist in der Zeichnung dargestellt und wird im Folgenden näher beschrieben. Es zeigen
- Fig. 1, 1a, 1b, 1c: einen ersten Typ von Kühlmodul in einer Ansicht, einer Draufsicht, einer Ansicht von unten und einer Seitenansicht,
- Fig. 2a, 2b: einen Kühlmittelkühler des Kühlmoduls in zwei verschiedenen perspektivischen Darstellungen mit Befestigungselementen,
- Fig. 3, 3a, 3b, 3c: einen zweiten Typ von Kühlmodul mit veränderten Befestigungselementen in einer Ansicht, einer Draufsicht, einer Ansicht von unten und einer Seitenansicht und
- Fig. 4a, 4b: den Kühlmittelkühler des Kühlmoduls gemäß Fig. 3 in zwei unterschiedlichen perspektivischen Darstellungen mit veränderten Befestigungselementen.

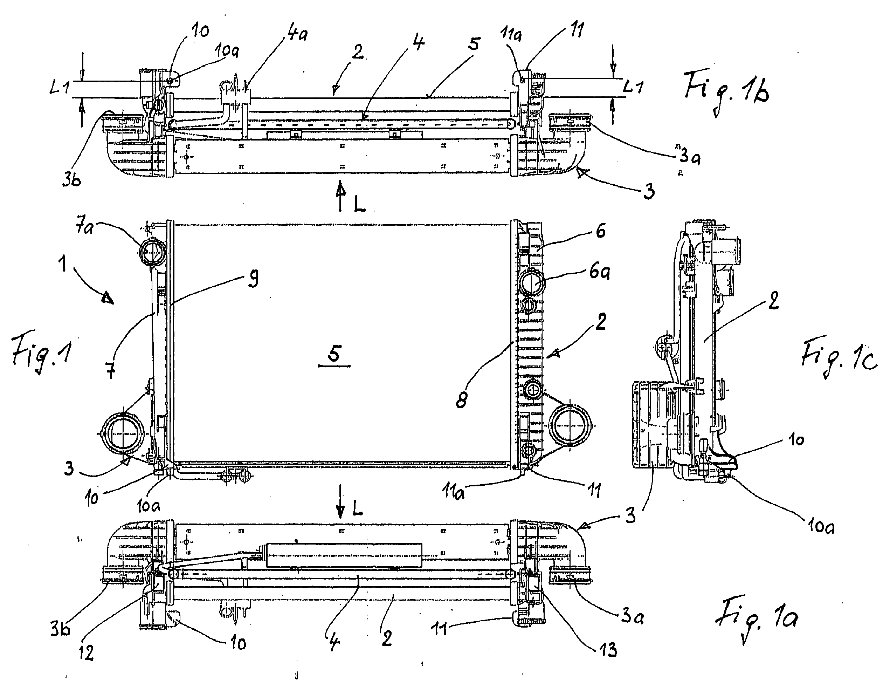

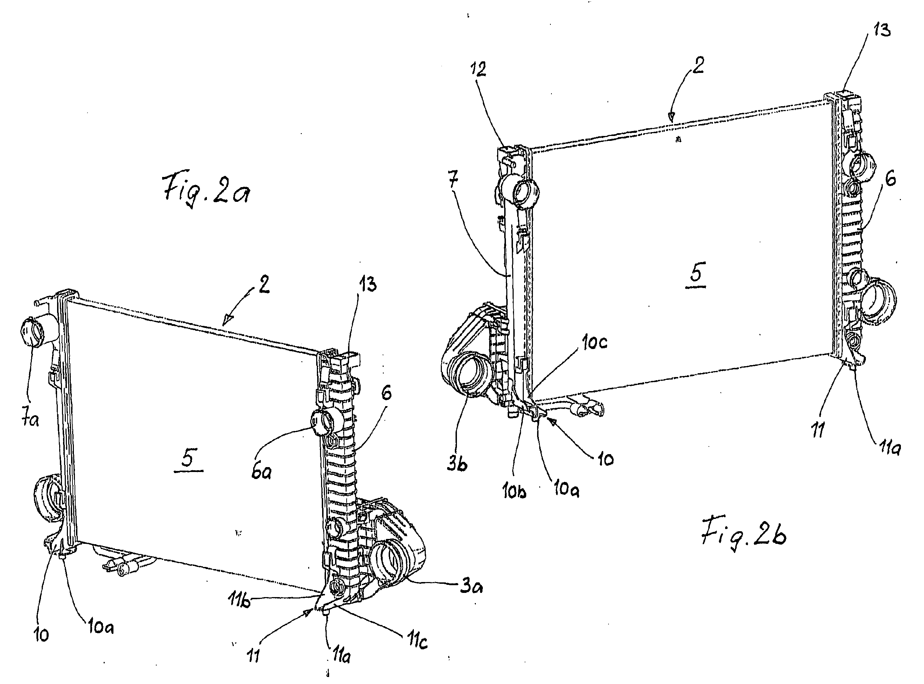

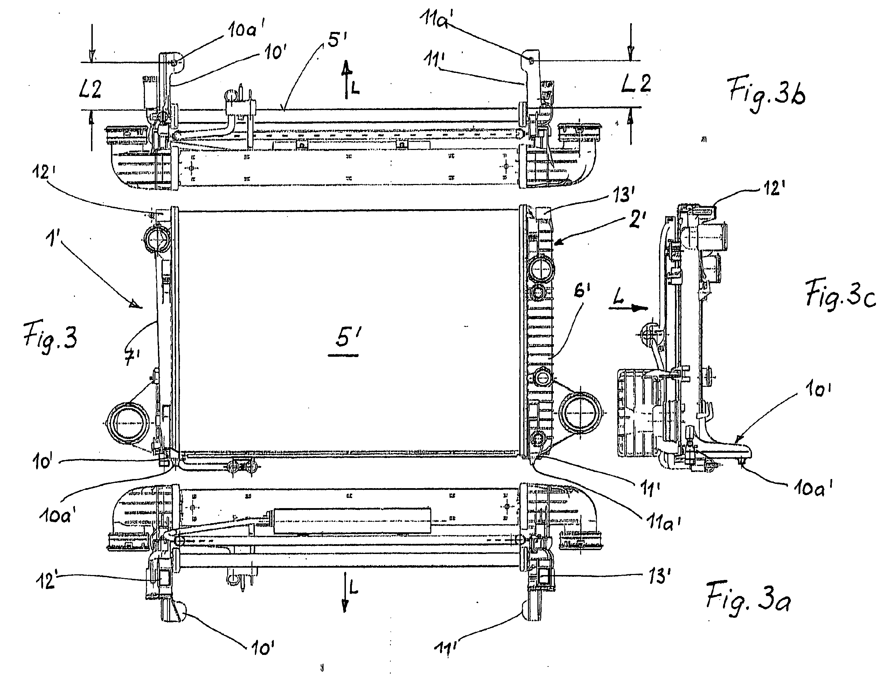

**Fig. 1, 1a, 1b** und **1** zeigen in unterschiedlichen Ansichten ein Kühlmodul 1, welches aus einem Kühlmittelkühler 2, einem Ladeluftkühler 3 und einem zwischen beiden angeordneten Kältemittelkondensator 4 aufgebaut ist. Die Wärmeübertrager 2, 3, 4 sind untereinander auf hier nicht näher erläuterte Art mechanisch zu einer Baugruppe, dem Kühlmodul 1, verbunden. Der Kühlmittelkühler 2, der als Träger für das gesamte Kühlmodul 1 fungiert, weist ein aus nicht dargestellten Flachrohren und Wellrippen gelötetes Netz (Block) 5 und zwei seitlich angeordnete Sammelkästen 6, 7 aus Kunststoff auf, welche jeweils mechanisch mit einem metallischen Rohrboden 8, 9 verbunden sind. Die nicht dargestellten Rohre des Netzes 5 münden in die Rohrböden 8, 9 und sind mit diesen dicht und fest verlötet. Der Kühlmittelkühler 2 ist als so genannter Querstromkühler ausgebildet, d. h. mit waagerecht liegenden Rohren und senkrecht stehenden Sammelkästen 6, 7 im nicht dargestellten Fahrzeug eingebaut. Die Sammelkästen 6, 7 weisen jeweils einen Kühlmittelaustrittsstutzen 6a und einen Kühlmitteleintrittsstutzen 7a auf, über welche der Anschluss an einen nicht dargestellten Kühlmittelkreislauf erfolgt. In analoger Weise sind der Ladeluftkühler 3, der Ladeluftstutzen 3a, 3b aufweist, an ein nicht dargestelltes Ladeluftsystem und der Kältemittelkondensator 4 über einen Anschlussflansch 4a mit einem nicht dargestellten Kältemittelkreislauf einer Fahrzeugklimaanlage verbunden. Das Kühlmodul 1 wird von Umgebungsluft in Richtung der Pfeile L durchströmt.

Die Abstützung des Kühlmoduls 1 erfolgt über untere Befestigungselemente 10, 11 sowie obere Befestigungselemente 12, 13 (Fig. 1a), welche jeweils an die Kühlmittelkästen 6, 7 angespritzt sind, d. h. einstückig mit diesen in Kunststoff ausgebildet sind. Die unteren Befestigungselemente 10, 11 sind als L-Profile ausgebildet und weisen an ihrer Unterseite jeweils einen Befestigungszapfen 10a, 11 a auf, mittels derer das Kühlmodul 1 in nicht dargestellten elastischen Aufnahmebuchsen an einem nicht dargestellten Querträger des Fahrzeuges fixiert ist. Der Abstand, in Fahrtrichtung gesehen, zwischen den Befestigungszapfen 10a, 11a und der Stirnfläche des Kühlernetzes 5 ist mit L1 angegeben. Die oberen Befestigungselemente 12, 13 sind als offene Kastenprofile ausgebildet, welche an einem nicht dargestellten oberen Schlossquerträger des Fahrzeuges gehalten werden. Somit ergibt sich für das gesamte Kühlmodul 1 eine Befestigung an vier Punkten im Fahrzeug.

**Fig. 2a** und **2b** zeigen zwei unterschiedliche perspektivische Darstellungen des Kühlmittelkühlers 2 gemäß Fig. 1, in Fahrtrichtung gesehen, d. h. in Richtung auf die Luftaustrittsseite des Netzes 5 und die offenen Seiten der Kühlmittelstutzen 6a, 7a sowie der Ladeluftstutzen 3a, 3b. Am Kühlmittelkasten 6 ist das Befestigungselement 11 in Form eines L-Profils angespritzt, d. h. in Form eines waagerecht abragenden Fußes, der durch zwei seitliche Rippen 11 b, 11 c versteift ist. In ähnlicher Form ist am Kühlmittelkasten 7 das Befestigungselement 10, ebenfalls in Form eines L-Profils angespritzt, wobei auch hier ein waagerecht abragender Fuß mit Versteifungsrippen 10b, 10c erkennbar ist. Jeweils auf der Unterseite der beiden Füße 10, 11 sind die Befestigungszapfen 10a, 11a angespritzt, die der Aufnahme von horizontalen Schubkräften dienen. Am oberen Ende der Kühlmittelkästen 6 und 7, und zwar jeweils auf deren Vorderseite, in Fahrtrichtung gesehen, sind die nach oben offenen Kastenprofil 12, 13 angeordnet.

**Fig. 3, 3a, 3b** und **3c** zeigen verschiedene Ansichten, nämlich von vorn, von oben, von unten und von der Seite eines zweiten Typs von Kühlmodul 1', welches sich von dem zuvor beschriebenen Kühlmodul 1 nur durch die Abmessungen und die Positionen der Befestigungselemente 10', 11' 12', 13' unterscheidet. Ansonsten entspricht dieses Kühlmodul 1' hinsichtlich der Zahl, der Größe und Ausbildung der Wärmeübertrager dem Kühlmodul 1. In Fig. 3b ist der Abstand der Befestigungszapfen 10a', 11a' von der Stirnfläche 5' des Kühlmittelkühlers 2 mit L2 bezeichnet. Im Vergleich mit Fig. 1 b für das Kühlmodul 1 ist ersichtlich, dass L2 erheblich größer als L1 ist. Das Verhältnis L2/L1, welches sich hier aus der zeichnerischen Darstellung ergibt, ist jedoch willkürlich gewählt und kann nach oben oder unten variieren, z. B. durch Verlängerung oder Verkürzung des Fußes 10', 11'. Die weiteren Ansichten Fig. 3a und Fig. 3c zeigen ebenfalls das vergrößerte Maß L2 gegenüber der ersten Ausführungsform des Kühlmoduls 1. Analog sind auch die oberen Befestigungspunkte versetzt, d. h. die Befestigungselemente 12', 13' befinden sich bei dem Kühlmodul 1' bzw. bei dem Kühlmittelkühler 2' auf der Rückseite der Kühlmittelkästen 6', 7', d. h. auf der Seite der Luftaustrittsfläche 5'. Die Strömungsrichtung der Luft durch das Kühlmodul 1' ist durch Pfeile L gekennzeichnet (die nicht dargestellte Fahrtrichtung des Kraftfahrzeugs ist die entgegengesetzte Richtung).

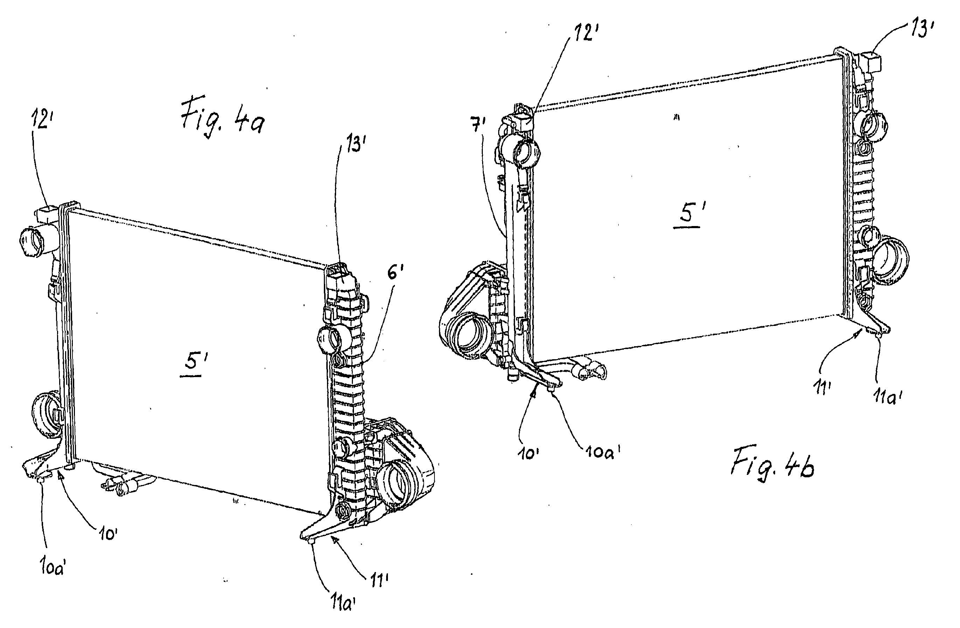

Die **Fig. 4a** und **4b** zeigen zwei unterschiedliche perspektivische Darstellungen des Kühlmittelkühlers 2' mit Blick auf dessen luftaustrittsseitige Stirnfläche 5'. Auch hier erkennt man in der perspektivischen Darstellung die unterschiedlichen Längen der Füße bzw. Befestigungselemente 10', 11' im Vergleich zu den Fig. 2a und 2b. Ebenso erkennt man die unterschiedlichen Positionen der oberen Befestigungselemente 12' und 13', die hier auf der Rückseite der Kühlmittelkästen 6', 7' angeordnet sind. Sie sind damit gegenüber dem ersten Typ des Kühlmoduls 1 etwa um denselben Betrag in Luftströmungsrichtung versetzt, wie die Befestigungszapfen 10a', 11a'.

Die Veränderung der Abmessungen der unteren Befestigungselemente von L1 auf L2 und die Veränderung der Positionen der oberen Befestigungselemente 12', 13' von der Vorderseite auf die Rückseite bewirkt beim Einbau des Kühlmoduls, dass das Kühlmodul 1' um die Differenz L2 - L1 in Fahrtrichtung im Fahrzeug nach vorne rückt - wie bereits erwähnt, bei gleichen Befestigungspunkten im Fahrzeug, d. h. im unteren und oberen Querträger.

Die Herstellung der Sammelkästen 6, 7 und 6', 7' erfolgt jeweils in demselben Spritzwerkzeug - allerdings mit so genannten Wechseleinsätzen für die Befestigungselemente 10, 11, 12, 13 und 10', 11', 12', 13'. Insofern benötigt man für die beiden Kühlmittelkästen 6 und 6' nur eine Spritzform mit vier Wechseleinsätzen, und ebenso nur eine Spritzform für die beiden Kühlmittelkästen 7 und 7'. Grundsätzlich sind auch mehrere Wechseleinsätze möglich, sofern weitere Variationen oder Abstufungen gewünscht sind.

## Patentansprüche

1. Wärmeübertrager für ein Kraftfahrzeug, insbesondere Kühlmittel/Luft-Kühler (2, 2'), welcher im Kraftfahrzeug an einem unteren Träger und einem oberen Querträger mittels oberen und unteren Befestigungselementen befestigbar ist, wobei der Wärmeübertrager (2, 2') Sammelkästen (6, 7, 6', 7') aus Kunststoff aufweist, an welche die Befestigungselemente anspritzbar sind, **dadurch gekennzeichnet, dass** die Befestigungselemente (10, 11, 12, 13; 10', 11', 12' 13') mit unterschiedlichen Positionen und/oder unterschiedlichen Abmessungen, insbesondere zwei Positionen und/oder zwei Abmessungen (L1, L2) herstellbar sind.

2. Wärmeübertrager nach Anspruch 1, **dadurch gekennzeichnet, dass** die Sammelkästen (6, 6', 7, 7') in einem Spritzwerkzeug mit Wechseleinsätzen abspritzbar sind und dass die Befestigungselemente (10, 11, 12, 13; 10', 11', 12', 13') durch einen Austausch der Wechseleinsätze herstellbar sind.

3. Wärmeübertrager nach Anspruch 1 oder 2, **dadurch gekennzeichnet, dass** die unteren Befestigungselemente (10, 11; 10', 11') als Halter mit einem L-Profil ausgebildet sind.

4. Wärmeübertrager nach Anspruch 3, **dadurch gekennzeichnet, dass** ein L-Schenkel vom Sammelkasten (6, 7; 6', 7') abragt und der andere L-Schenkel in den Sammelkasten übergeht und dass der abragende L-Schenkel unterschiedliche Längen (L1, L2) aufweist.

5. Wärmeübertrager nach Anspruch 4, **dadurch gekennzeichnet, dass** der abragende L-Schenkel (10, 11; 10', 11') durch Rippen (10b, 10c, 11 b, 11 c) versteift ist, die ein U-Profil bilden.

6. Wärmeübertrager nach Anspruch 3, 4 oder5, **dadurch gekennzeichnet, dass** am dem Sammelkasten (6, 7; 6', 7') abgewandten Ende des abragenden Schenkels (10, 11; 10', 11') ein Haltezapfen (10a, 11 a; 10'a, 11'a) angeordnet ist.

7. Wärmeübertrager nach Anspruch 7, **dadurch gekennzeichnet, dass** die oberen Befestigungselemente (12, 13; 12', 13') wechselweise auf unterschiedlichen Positionen des Sammelkastens (6, 7; 6', 7') angeordnet sind, insbesondere auf sich gegenüber liegenden Längsseiten der Sammelkästen.

8. Wärmeübertrager nach einem der Ansprüche 1 bis 8, **dadurch gekennzeichnet, dass** die Sammelkästen (6, 7) jeweils mit Rohrböden (8, 9) verbunden sind, zwischen denen ein Rohr/Rippen-Block (5) angeordnet ist.

9. Wärmeübertrager nach einem der Ansprüche 1 bis 9, **dadurch gekennzeichnet, dass** an dem Wärmeübertrager (2) weitere ein Kühlmodul (1) bildende Wärmeübertrager, insbesondere ein Ladeluft/Luft-Kühler (3) und/oder ein Kältemittel/Luft-Kondensator (4) befestigt sind.

10. Wärmeübertrager nach einem der Ansprüche 1 bis 10, **dadurch gekennzeichnet, dass** der Wärmeübertrager, insbesondere der Kühlmittelkühler (2) als Querstrom-Wärmeübertrager mit seitlich und senkrecht angeordneten Sammelkästen (6, 7) ausgebildet ist.
